# EUROPEAN PATENT SPECIFICATION

(11) **EP 2 086 345 B1**
(45) Date of publication and mention of the grant of the patent: **20.04.2016**
(21) Application number: 07834787.9
(22) Date of filing: 25.10.2007
(51) Int. Cl.: A23K 50/80, A23K 20/163, A23K 10/30

(54) **FISH FEED AND USES THEREOF**
FISCHFUTTER UND SEINE VERWENDUNG
ALIMENT POUR POISSON ET SES UTILISATIONS

(30) Priority: 25.10.2006 NO 20064871
(43) Date of publication of application: 12.08.2009
(60) Divisional application: 13189273.9
(73) Proprietor: Ewos Innovation AS, 4335 Dirdal (NO); Chemoforma Ltd, 4302 Augst (CH)
(72) Inventor: GONZALEZ VECINO, José Luis, 4013 Stavanger (NO); WADSWORTH, Simon, 4310 Hommersåk (NO)
(74) Representative: Hindenes, Jan-Ove
(86) International application number: PCT/NO2007/000379
(87) International publication number: WO 2008/051091

(56) References cited:
- US-A1- 2003 091 589
- FRITTS, C.A., AND WALDROUP, P.W: "Evaluation of Bio-Mos Mannan Oligosaccharide as a replacement for growth promoting antibiotics in diets for turkeys" INTERNATIONAL JOURNAL OF POULTRY SCIENCE, vol. 2, no. 1, 2003, XP002469844
- SPRING, P. WENK, C., DAWSON, K.A., AND NEWMAN, K.E.: "The effects of dietary mannanoligosaccharides in cecal parameters and the concentrations of enteric bacteria in the ceca of salmonella-challenged broiler chicks" POULTRY SCIENCE, vol. 79, 2000, pages 205-211, XP002469845 USCHAMPAIGN, IL
- BELGIN HOSSU, SEMIH SALNUR, NEJDET GULTEPE: "The effects of yeast derivatives (Bio-Mos) on growth of gilthead sea bream" 2005, WORLD AQUACULTURE 2005 ABSTRACTS , BALI ,INDONESIA , XP002469846 the whole document
- DATABASE BIOSIS [Online] BIOSCIENCES INFORMATION SERVICE, PHILADELPHIA, PA, US; May 2005 (2005-05), HUA XUE-MING ET AL: "Effect of dietary supplemental chitosan and probiotics on growth and some digestive enzyme activities in juvenile Fugu obscurus" XP002469848 Database accession no. PREV200510243710 & ACTA HYDROBIOLOGICA SINICA, vol. 29, no. 3, May 2005 (2005-05), pages 299-305, ISSN: 1000-3207
- DATABASE AQUASCI [Online] 1991, KARASEVA, T.A. ET AL: "On prophylaxis and treatment of the Atlantic salmon (Salmo salar L.) papillomatosis. ICES COUNCIL MEETING PAPERS." XP002469849 retrieved from STN Database accession no. 91:19292 & 11 PP. ICES. COPENHAGEN (DENMARK). ICES-CM-1991/F:5. MEETING INFO.: COUNC. MEET. OF THE INT. COUNC. FOR THE EXPLORATION OF THE SEA. (LA ROCHELLE (FRANCE)). (26 SEP-4 OCT 1991)., 1991,
- DATABASE OCEAN [Online] 2003, PRYOR, G.S. ET AL: "Mannanoligosaccharides in Fish Nutrition: Effects of Dietary Supplementation on Growth and Gastrointestinal Villi Structure in Gulf of Mexico Sturgeon" XP002469850 retrieved from STN Database accession no. 2004:9790 & NORTH AMERICAN JOURNAL OF AQUACULTURE [N. AM. J. AQUACULT.], (20030000) VOL. 65, NO. 2, PP. 106-111. ISSN: 1522-2055., 2003,
- DATABASE AQUASCI [Online] 2001, FISCHER, A. ET AL: "Effect of Aqua-mos and SP604 on the immune system of shrimp Litopenaeus vannamei Aquaculture 2001: Book of Abstracts" XP002469851 retrieved from STN Database accession no. 2001:46739 & 754 PP. WORLD AQUACULTURE SOCIETY. 143 J.M PARKER COLISEUM LOUISIANA STATE UNIVERSITY BATON ROUGE LA 70803 USA. MEETING INFO.: AQUACULTURE 2001. LAKE BUENA VISTA, FL (USA). 21-25 JAN 2001., 2001,

## Description

The present invention relates to a method for restoration or counteracting negative nutritional effects caused by feeding a plant protein containing feed to a salmon.

Soybean is a viable source of protein replacement for declining fish meal resources and has made a significant contribution for instance to sustainable salmonid aquaculture.

Certain forms of soybean, for instance extracted preparations in fish diets can lead to an increased incidence of pathological changes associated with the hind gut of the fish, especially when fed at higher concentration. These changes include a marked variation in the degree of vacuolation, a loss of gut integrity, sloughing of the mucosa into the gut lumen and infiltration of inflammatory cells into the submucosa. It has been shown that this addition of soy in the fish feed has significantly reduced fish growth, performance, immunity and health.

Fritts, C.A. et al, International Journal of Poultry Science, vol 2, no. 1, 2003 describes a study for evaluating mannan-oligosaccharides as replacement for antibiotics for Turkeys.

Spring, p. et al, Poultry Science vol. 79, 2000, pages 205-211, describes the effect of mannan-oligosaccharides on cecal parameters in salmonella-challenged chicks.

US2003/091589 describes the feeding of yeast cell wall-containing compositions to animals exposed to coccidian.

Hossu, B., et al., World Aquaculture 2005 Abstracts, Bail, Indonesia describes the effect of yeast derivatives on the growth of Gilthead Sea Bream.

Hua Xue, Ming et al., Database Biosis, Biosciences Information Service, Philadelphia, PA, US, May 2005, describes

Karaseva, T.A. et al., ICES Council Meeting papers describes the effect of dietary supplemental chitosan and probiotics on growth in juvenile Fugu obscurus.
Pryor, G.S. et al., Database Ocean 2003 describes prophylaxis and treatment of Atlantic salmon papillomatosis by using BIOMOS.

Fisher, a. et al, Database Aquasci 2001 describes the effect of Aqua-MOS on the immune system of shrimp Litopenaeus vannamei.

The aim of the present invention is to find feed components that can restore the negative nutritional and pathogenic effects of soy in the fish feed.

### Figure legends

Figure 1 shows the negative effect of extracted soy bean meal (SBM) on the weight gain of relative to the control without SBM. The positive control diet is Fish Meal (FM). The addition of MOS counteracts the negative effect of SBM.
Figure 2 shows the negative effect of SBM on FCR, and improvement by the addition of manna-oligosaccharides (MOS).
Figure 3 shows specific growth rates (SGR) of Atlantic salmon *Salmo salar* (400g) fed a base diet of 15% soybean, in addition to MOS concentrations for 12 weeks. SGR1: 0-6 weeks post-feeding; SGR2: 6-12 weeks and overall SGR is at the end of the study, 12 weeks post feeding (mean ± SEM).
Figure 4 shows specific growth rates (SGR) of Atlantic salmon (*Salmo salar*) (400g) during the second part of the study (6-12 weeks post-feeding) fed a base diet of 15% soybean meal (SBM), in addition to MOS concentrations for 12 weeks (mean ± SEM).

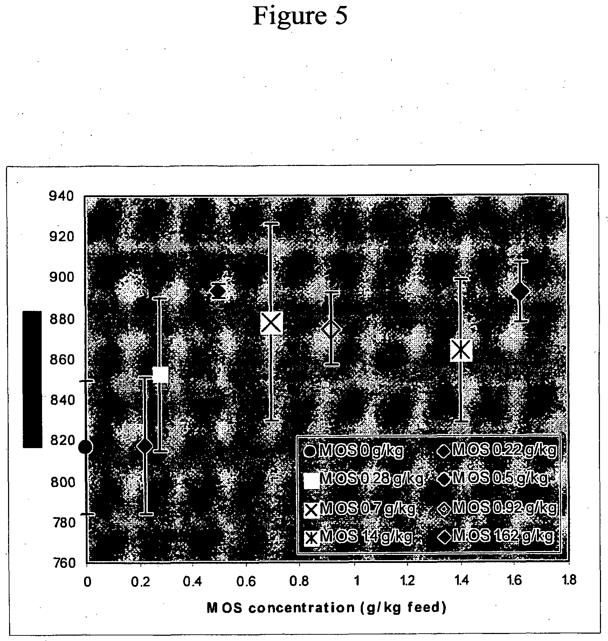

Figure 5 shows the final weight (g) (±SEM) of Atlantic salmon *Salmo salar* (400g) fed 12 weeks on a base diet of 15% soybean meal (SBM), in addition to increasing MOS concentrations.
Figure 6 shows the feed conversion ratio (FCR) versus MOS content of Atlantic salmon *Salmo salar* (400g) fed a base diet of 15% soybean meal (SBM), in addition to MOS concentrations for 12 weeks (mean ± SEM).
Figure 7 shows the Astaxanthin content in NQC of Atlantic salmon (*Salmo salar*) fed different treatment 12 weeks post-feeding.
Figure 8 shows Roche Sa*lmo*Fan _{™} score of NQC of Atlantic salmon (*Salmo salar*) fed different treatment 12 weeks post-feeding. Percentage of fish equal of above RSF24, RSF25, RSF26 and RSF27. Combo diet means Nucleotides+MOS+PG diet.

A first aspect of the present invention thus relates to a a method for restoration or counteracting of the negative nutritional or pathological effects caused by feeding a plant protein containing feed to a salmon, characterized in that said fish also is fed manna-oligosaccharides.

Preferred embodiments of the invention are given in the claims 2-11.

### Experimental section

### Example 1

### The negative effect of soy protein, and the counteracting effect of MOS

A total of 490 Atlantic salmon, *Salmo salar,* 425g mixed-sex were individually PIT tagged, previously graded and randomly distributed between all 14 tanks (1 m 0); 35 fish in each tank. Average seawater temperature was 9.1°C (± 2.1 ° C), oxygen >8 mgl-1. After a 3-week acclimation period, the fish were fed a FM-based diet, a 15% SBM diet or a 15% SBM with 0.2% MOS added. Diets were fed over 3 meals day-1 to appetite. Each diet was fed to five replicate tanks, apart from FM diet that was fed to four replicates. Each tank contained feed waste collector to calculate real daily feed consumption. Final weights were recorded and distal intestine sampled for histopathology. Histological samples from 5 fish per tank were assessed under a light microscope.

Data were also analysed using one-way ANOVA, SPSS 13.0 software (SPSS Inc., Chicago, IL, USA). Average of each tank was used for Feed Conversion rate (FCR), weight gain and gut health score (data not shown).

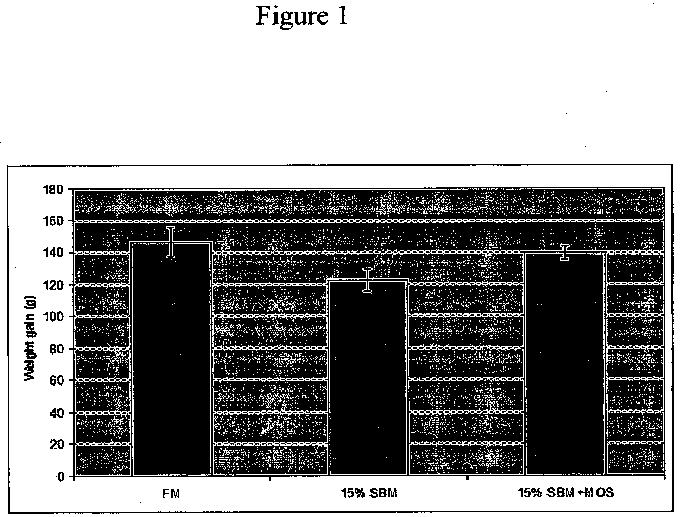

Figure 1 shows the nutritional effects of Soy Bean Meal (SBM) compared to the control with Fish meal (FM), and the restoration of this negative growth effect with the addition of MOS.

The feed contained 15% extracted soybean meal (SBM), which is known to cause enteritis when fed at levels above ca. 10% of the diet.

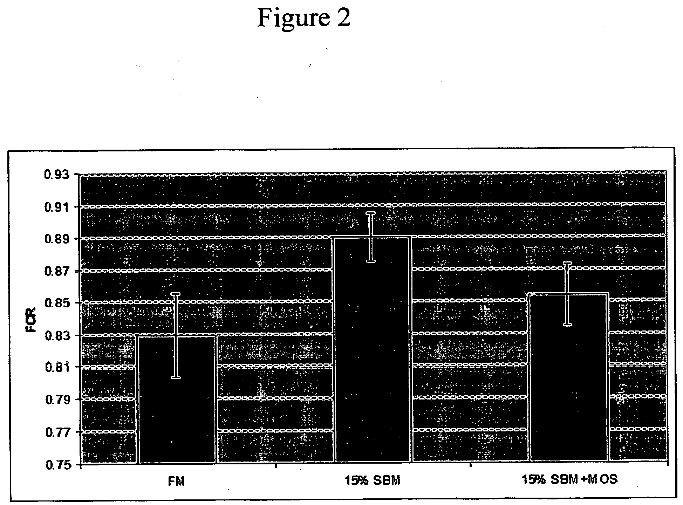

Figure 2 shows the negative effect of Soy Bean Meal (SBM) on feed conversion rate (FCR)

### Example 2

### Effect on growth parameters of fish fed a feed containing MOS and soy bean feed

A total of 1080 Atlantic salmon *Salmo salar,* 400g, mixed-sex, were transferred to 24 x 1m³ seawater tanks at 45 fish per tank. Average seawater temperature was 9.1°C (± 2.1 °C), oxygen >8 mgl⁻¹. 24h photoperiod. After 6 weeks acclimation the fish were fed test diets for a period of 12 weeks. Diets were fed over 3 meals day⁻¹ to appetite. Each diet was fed to triplicate tanks. Each tank contained feed waste collector to calculate real daily feed consumption. Fish were sampled at 6 & 12 weeks post-feeding. Final weights were recorded and distal intestine sampled for histopathology. Histological samples from 5 fish per tank were assessed under a light microscope.

Since the trial was set up as a 2 x 4 factorial design, the data were also analysed using Mixed Model analysis, SPSS 13.0 software (SPSS Inc., Chicago, IL, USA) as well as ANOVA test. Actual MOS content in all the diets was used as a covariate in the mixed model, considering tank as a random effect. Average of each tank was used for Specific growth rates (SGR), Feed Conversion rate (FCR), weight gain, Thermal growth coefficient (TGC) and gut health score (data not-shown).

**Table 1**

| **Test diets fed during the study** | | | |
|---|---|---|---|
| **Number** | **Code** | **Description** | **Calculated MOS content (g · kg feed⁻¹)** |
| 1 | 5274 | Soybean 15% (-ve control) | 0.00 |
| 2 | 5275 | Boost (+ve control) | 0.22 |
| 3 | 5276 | MOS 0.10% | 0.28 |
| 4 | 5277 | MOS 0.25% | 0.70 |
| 5 | 5278 | MOS 0.50% | 1.40 |
| 6 | 5279 | Boost + MOS 0.10% | 0.50 |
| 7 | 5280 | Boost + MOS 0.25% | 0.92 |
| 8 | 5281 | Boost + MOS 0.50% | 1.62 |

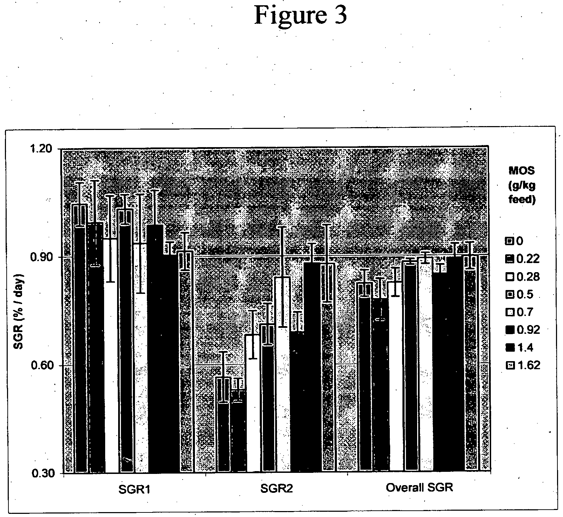

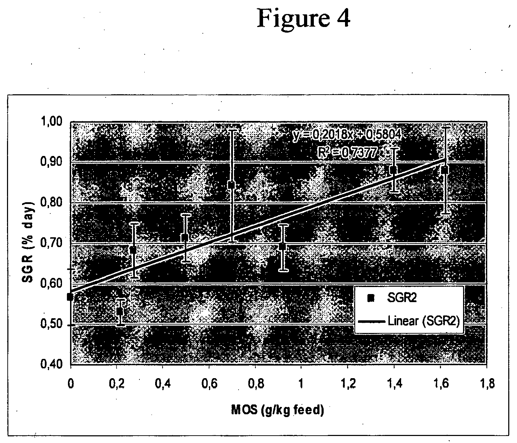

Between 6 to 12 weeks post-feeding test diets there was a significant increase in the specific growth rate (SGR) observed in the fish fed MOS (p<0.001) (Figure 3, Figure 4). This increase in performance was significantly correlated to the MOS content in the diet (SGR between 6-12 weeks: p<0.01, r=0.640; overall SGR: p<0.05, r=0.487). The addition of Nucleotides to the diet showed no significant correlation (p=0.956).

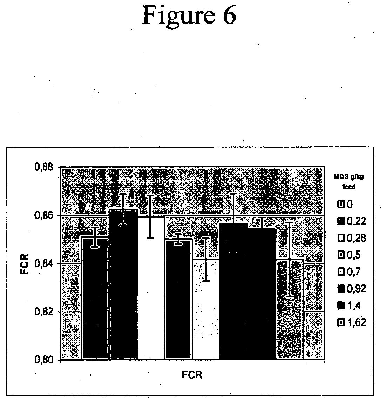

Similar results were also obtained when growth was expressed by weight gain (WG), weight gain as a percentage of the initial weight (WG%) and thermal growth coefficient (TGC). There was a significant improvement in these growth parameters during 6 to 12 weeks post-feeding test due to the addition of MOS to the diets.
At 12 weeks post feeding, final weights were not influenced by the addition of Nucleotides, MOS or both (respectively p=0.918; p=0.113; p=0.837; Figure 6) using mixed model analysis. However by using ANOVA genera I linear model analysis (GLM) after 12 weeks post feeding there was a significant difference (10% weight increase) observed in the fish fed the Nucleotides + MOS 0.1% & Nucleotides + MOS 0.5% compared to controls (p<0.05). The MOS 0.25% was significant different to controls at 90% confidence (p<0.10). For the experimental design used during the study the mixed model analysis was considered the most rigorous technique.

**Table 2. P-values from mixed model of growth parameters using Nucleotides and MOS content as dietary factors, tank as random factor and MOS content as a covariate. (*) Significant influences.**

| | | Nucleotides | MOS content | Nucleotides*MOS content |
|---|---|---|---|---|
| 0-6 weeks | WG1 | 0.551 | 0.164 | 0.971 |
| | WG%1 | 0.629 | 0.179 | 0.971 |
| | TGC1 | 0.597 | 0.178 | 0.998 |
| 6-12 weeks | WG2 | 0.451 | 0.001* | 0.965 |
| | WG2% | 0.385 | 0.001 | 0.967 |
| | TGC2 | 0.402 | 0.001* | 0.982 |
| Overall (0-12 weeks) | WG | 0.942 | 0.037* | 0.943 |
| | WG% | 0.789 | 0.016 | 0.898 |
| | TGC | 0.839 | 0.021* | 0.981 |

**Table 3. Net Weight gain (a), weight gain as % of initial body weight (b) and thermal growth coefficients (TGC) (c) of Atlantic salmon (Salmo salar) (400g) fed a base diet of 15% soybean, in addition to MOS concentrations for 12 weeks. (Mean ± SEM).**

| **a)** | | **0 - 6 weeks** | **6 - 12 weeks** | **0 - 12 weeks** |
|---|---|---|---|---|
| Diet | MOS content (g/kg feed) | Weight gain1 (g) | Weight gain2 (g) | Overall Weight gain (g) |
| Control | 0 | 234.31 ± 11.61 | 151.36 ± 22.85 | 385.67 ± 25.23 |
| Nucleotides | 0.22 | 232.56 ± 32.92 | 142.56 ± 6.20 | 375.12 ± 33.69 |
| MOS 0.1% | 0.28 | 222.36 ± 38.08 | 184.16 ± 10.28 | 406.52 ± 31.02 |
| Nucleotides +MOS | | | | |
| 0.1% | 0.50 | 245.22 ± 11.00 | 201.77 ± 14.95 | 446.99 ± 4.48 |
| MOS 0.25% | 0.70 | 212.33 ± 37.16 | 228.01 ± 33.21 | 440.33 ± 21.21 |
| Nucleotides +MOS | | | | |
| 0.25% | 0.92 | 235.47 ± 27.55 | 192.43 ± 12.12 | 427:89 ± 16.27 |
| MOS 0.5% | 1.40 | 200.65 ± 11.56 | 235.21 ± 20.85 | 435.86 ± 30.11 |
| Nucleotides +MOS | | | | |
| 0.5% | 1.62 | 206.88 ± 13.46 | 241.93 ± 28.15 | 448.81 ± 19.83 |

| b) | | | | |
|---|---|---|---|---|
| Diet | MOS content (g/kg feed) | Weight gain1 (% initial weight) | Weight gain2 (% initial weight) | Overall Weight gain (% initial weight) |
| Control | 0 | 0.54 ± 0.03 | 0.23 ± 0.03 | 0.89 ± 0.05 |
| Nucleotides | 0.22 | 0.52 ± 0.07 | 0.21 ± 0.01 | 0.85 ± 0.08 |
| MOS 0.1% | 0.28 | 0.50 ± 0.08 | 0.28 ± 0.03 | 0.91 ± 0.06 |
| Nucleotides +MOS | | | | |
| 0.1% | 0.50 | 0.55 ± 0.02 | 0.29 ± 0.03 | 1.00 ± 0.02 |
| MOS 0.25% | 0.70 | 0.49 ± 0.08 | 0.36 ± 0.07 | 1.01 ± 0.02 |
| Nucleotides +MOS | | | | |
| 0.25% | 0.92 | 0.53 ± 0.06 | 0.28 ± 0.03 | 0.96 ± 0.04 |
| MOS 0.5% | 1.40 | 0.47 ± 0.02 | 0.37 ± 0.03 | 1.02 ± 0.06 |
| Nucleotides +MOS | | | | |
| 0.5% | 1.62 | 0.47 ± 0.03 | 0.37 ± 0.05 | 1.01 ± 0.06 |

| c) | | | | |
|---|---|---|---|---|
| Diet | MOS content (g/kg feed) | TGC1 | TGC2 | Overall TGC |
| Control | 0 | 3.04 ± 0.15 | 5.74 ± 0.25 | 7.59 ± 0.12 |
| Nucleotides | 0.22 | 2.96 ± 0.37 | 5.41 ± 0.09 | 7.31 ± 0.19 |
| MOS 0.1% | 0.28 | 2.83 ± 0.40 | 6.95 ± 0.19 | 7.79 ± 0.15 |
| Nucleotides +MOS | | | | |
| 0.1% | 0.50 | 3.10 ± 0.12 | 7.37 ± 0.19 | 8.43 ± 0.03 |
| MOS 0.25% | 0.70 | 2.75 ± 0.42 | 8.58 ± 0.45 | 8.40 ± 0.04 |
| Nucleotides +MOS | | | | |
| 0.25% | 0.92 | 2.98 ± 0.31 | 7.12 ± 0.20 | 8.12 ± 0.09 |
| MOS 0.5% | 1.40 | 2.66 ± 0.12 | 8.93 ± 0.2.1 | 8.41 ± 0.14 |
| Nucleotides +MOS | | | | |
| 0.5% | 1.62 | 2.68 ± 0.15 | 9.01 ± 0.36 | 8.48 ± 0.12 |

The results show a significant improvement in growth performance in fish fed soybean with MOS, compared to soybean fed without MOS. It might be expected that the feed conversion ratio would improve as a result of the improved uptake and nutrient availability. In the study, diets that showed a significant weight increase had lower FCR than control. There was no significant difference in feed uptake observed between diets during the study.

### Example 3

### Pigmentation

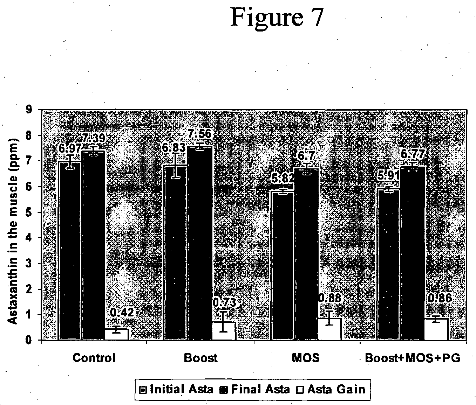

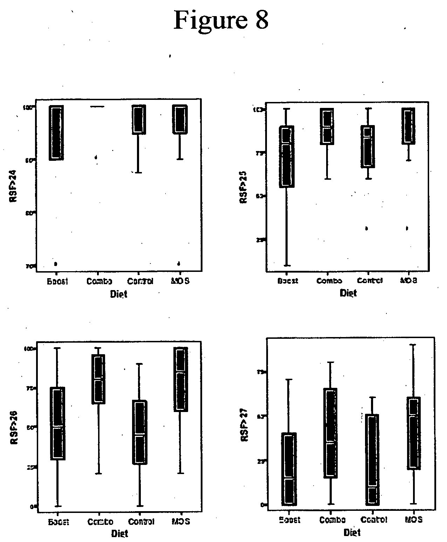

Assessment of pigmentation showed an improved pigmentation uptake with the diets containing MOS and nucleotides. In order to study potential diets were supplemented with 30ppm Asta. Pigment concentration in the muscle (NQC) and Roche *Salmo*Fan _{™} were measured at the start and end of the trial in all the treatments by sampling 40 fish per cage at the beginning of the experiment and 80 fish per cage at the end of the study. Colour (Roche *Salmo*Fan ™) was measured on individual NQC (figure 8) and astaxanthin (mg/kg) (figure 7) was measured in pools of 10 fish per replicate cage.

Astaxanthin content in the muscle of MOS and Nucleotides + MOS + PG at the start of the trial was approximately 1ppm lower than the rest of the groups (Figure 7). This was a consequence of these fish being used in a former pigment trial. Astaxanthin content in these groups at the end of the trial was still lower than the Control and Nucleotides groups. Nevertheless when the pigment gain in muscle was compared between groups, it showed that average pigment gain in the Nucleotides group was 73.8% higher, 109.5% higher in the MOS group and 104.8% in the Nucleotides + MOS + PG group higher than the control group.

This differences in pigmentation also correspond with differences in colour of the fillet. Differences between dietary treatments were observed in the Roche *Salmo*Fan™ (RSF) at harvest. Thus the percentage of fish that reached RSF score equal of above 25 was 88% and 89% in the MOS and Nucleotides+MOS+PG diets respectively compared to 72% and 78% in the control and Nucleotide groups respectively; these differences were almost significant (p = 0.07). Percentage offish that reached a RSF score equal of above 26 was 75% in the MOS and in the Nucleotides+MOS+PG diet, significantly higher that the 51% in the Nucleotide group and 47% in the control group; the difference between Nucleotide and control group was not significant. Percentage of fish that reached an RSF score equal of above 27 was 44% and 38% in the MOS and Nucleotide+MOS+PG diet, these values were significantly higher compared to 22% in the control and 21% in the Nucleotide group (Figure 8).

### Conclusions

The results show a significant improvement in growth performance in Atlantic salmon fed MOS (as well as MOS in addition to Nucleotides and immune stimulant), compared to control diets. Without being bound by theory, it is thought that the likely mode of action is to improve gut health and reduce negative effects of plant proteins such as extracted soybean. Improved intestinal health will allow more effective uptake of nutrients across the lumen due to the shorter distance to travel through the tissues, as well as the greater surface area of healthy gut tissue. Improved pigmentation uptake is possible a result of this effect and this is reflected in fillet colouration.

## Claims

1. A method for restoration or counteracting negative nutritional effects caused by feeding a plant protein containing feed to a salmon, **characterized in that** said salmon also is fed manna-oligosaccharides.

2. A method according to claim 1, **characterized in that** the growth of said salmon is improved.

3. A method according to any of the preceding claims, **characterized in that** said plant protein is a soy protein.

4. A method according to claim 3, **characterized in that** said soy protein is soy bean protein.

5. A method according to claim 1, **characterized in that** the amount of plant protein is in the range of 10 to 20%, based on the total weight of the feed.

6. A method according to claim 4, **characterized in that** the amount of soy bean meal is in the range of 10 to 20%, preferable about 15%, based on the total weight of the feed.

7. A method according to any of the preceding claims, **characterized in that** said feed further contains a mixture of nucleotides.

8. A method according to any of the preceding claims, **characterized in that** said feed further contains an immunostimulant, such as peptidoglycan.

9. A method according to any of the preceding claims, **characterized in that** said feed comprises soy protein, manna-oligosaccharides, a mixture of nucleotides and peptidoglycan.

10. A method according to claim 1, **characterized in that** the manna-oligosaccharides are fed after a period of feeding with plant protein containing feed, and where the MOS is fed at least in a period before harvesting of the fish.

11. A method according to claim 10, **characterized in that** the period for feeding manna-oligosaccharides pre-harvesting is at least 2 weeks, preferably at least 3 weeks, or most preferable at least 4 weeks.

## Patentansprüche

1. Verfahren zur Wiederaufstockung oder Bekämpfung negativer Auswirkungen der Ernährung, die durch Füttern eines pflanzliches Protein enthaltenden Futters an einen Lachs hervorgerufen werden, **dadurch gekennzeichnet, dass** der Lachs auch mit Mannan-Oligosacchariden gefüttert wird.

2. Verfahren nach Anspruch 1, **dadurch gekennzeichnet, dass** das Wachstum des Lachses verbessert wird.

3. Verfahren nach einem der vorhergehenden Ansprüche,
**dadurch gekennzeichnet, dass** das pflanzliche Protein ein Sojaprotein ist.

4. Verfahren nach Anspruch 3, **dadurch gekennzeichnet, dass** das Sojaprotein ein Sojabohnenprotein ist.

5. Verfahren nach Anspruch 1, **dadurch gekennzeichnet, dass** die Menge an pflanzlichem Protein in der Größenordnung von 10 bis 20% basierend auf dem Gesamtgewicht des Futters liegt.

6. Verfahren nach Anspruch 4, **dadurch gekennzeichnet, dass** die Menge an Sojabohnenmehl in der Größenordnung von 10 bis 20%, vorzugsweise etwa 15%, basierend auf dem Gesamtgewicht des Futters liegt.

7. Verfahren nach einem der vorhergehenden Ansprüche,
**dadurch gekennzeichnet, dass** das Futter weiter eine Mischung von Nukleotiden enthält.

8. Verfahren nach einem der vorhergehenden Ansprüche,
**dadurch gekennzeichnet, dass** das Futter weiter ein Immunstimulanz wie Peptidoglykan enthält.

9. Verfahren nach einem der vorhergehenden Ansprüche,
**dadurch gekennzeichnet, dass** das Futter Sojaprotein, Mannan-Oligosaccharide, eine Mischung von Nukleotiden und Peptidoglykan enthält.

10. Verfahren nach Anspruch 1, **dadurch gekennzeichnet, dass** die Mannan-Oligosaccharide nach einer Periode des Fütterns mit pflanzliche Proteine enthaltendem Futter gefüttert werden, und wobei die MOS mindestens während eines Zeitraums vor dem Fangen des Fischs gefüttert werden.

11. Verfahren nach Anspruch 10, **dadurch gekennzeichnet, dass** der Zeitraum des Fütterns von Mannan-Oligosacchariden vor dem Fangen mindestens 2 Wochen, vorzugsweise mindestens 3 Wochen, oder noch bevorzugter mindestens 4 Wochen beträgt.

## Revendications

1. Méthode pour restaurer ou contrecarrer les effets nutritionnels négatifs causés par l'apport d'une alimentation contenant une protéine végétale à un saumon, **caractérisé en ce que** le dit saumon est aussi alimenté en manno-oligosaccharides.

2. Méthode selon la revendication 1, **caractérisée en ce que** la croissance du dit saumon est améliorée.

3. Méthode selon l'une quelconque des revendications précédentes, **caractérisée en ce que** la dite protéine végétale est une protéine de soja.

4. Méthode selon la revendication 3, **caractérisée en ce que** la dite protéine de soja est une protéine de haricot de soja.

5. Méthode selon la revendication 1, **caractérisée en ce que** la proportion de protéine végétale est comprise entre 10 et 20%, sur la base du poids total de l'alimentation.

6. Méthode selon la revendication 4, **caractérisée en ce que** la proportion de repas de haricots de soja est comprise entre 10 et 20%, de préférence autour de 15%, sur la base du poids total de l'alimentation.

7. Méthode selon l'une quelconque des revendications précédentes, **caractérisée en ce que** la dite alimentation contient en outre un mélange de nucléotides.

8. Méthode selon l'une quelconque des revendications précédentes, **caractérisée en ce que** la dite alimentation contient en outre un immunostimulant, comme un peptidoglycane.

9. Méthode selon l'une quelconque des revendications précédentes, **caractérisée en ce que** la dite alimentation comprend de la protéine de soja, des manno-oligosaccharides, un mélange de nucléotides et un peptidoglycane.

10. Méthode selon la revendication 1, **caractérisée en ce que** les manno-oligosaccharides sont fournis après une période d'alimentation contenant de la protéine végétale, et où les manno-oligosaccharides sont fournis pendant au moins une période avant la récolte du poisson.

11. Méthode selon la revendication 10, **caractérisée en ce que** la période d'alimentation en manno-oligosaccharides précédant la récolte est au moins de deux semaines, de préférence d'au moins trois semaines et de préférence d'au moins quatre semaines.
